# EUROPÄISCHE PATENTANMELDUNG

(11) **EP 3 184 229 A1**
(43) Veröffentlichungstag der Anmeldung: **28.06.2017**
(21) Anmeldenummer: 16206009.9
(22) Anmeldetag: 21.12.2016
(51) Int. Cl.: B23K 26/03, B23K 26/06, B23K 26/067, B23K 26/28, B23K 31/12, B23K 26/08, B23K 26/10, B23K 101/00

(54) **SCHWEISSVORRICHTUNG UND VERFAHREN**

(30) Priorität: 23.12.2015 DE 102015122783
(71) Anmelder: GL Automation GmbH, 88255 Baienfurt (DE)
(72) Erfinder: Liebmann, Gregor, 88255 Baienfurt (DE)
(74) Vertreter: Pfister & Pfister Patent- und Rechtsanwälte

(57) **Zusammenfassung**

Die Erfindung betrifft eine Schweißvorrichtung, welche zwei Laserstrahlquellen zum gleichzeitigen Laserstrahlschweißen aufweist. Die Erfindung betrifft des Weiteren ein zugehöriges Verfahren.

## Beschreibung

Die Erfindung betrifft eine Schweißvorrichtung sowie ein Verfahren für das Verschweißen zweier Werkstücke einer Werkstückanordnung.

Werkstücke werden häufig zu Werkstückanordnungen verschweißt. Beispielsweise kann ein mit einer Welle verbundener Teller mit einem Rippengehäuse verschweißt werden. Dies kommt beispielsweise beim Herstellen einer Kupplung für Automobile, insbesondere in Zusammenhang mit einem Automatikgetriebe oder einem Doppelkupplungsgetriebe, vor. Dabei kann es insbesondere erforderlich sein, entlang einer runden Schweißbahn zu schweißen.

Es hat sich gezeigt, dass runde Schweißbahnen das Risiko einer Verspannung des Materials in sich bergen. Dies zwingt bei Verwendung von aus dem Stand der Technik bekannten Vorrichtungen und Schweißverfahren zu einem langsamen Schweißvorgang, wenn das Risiko eines erhöhten Ausschusses vermieden werden soll.

Es ist somit eine Aufgabe der Erfindung, eine Schweißvorrichtung bereitzustellen, mittels welcher entlang einer insbesondere runden Schweißlinie besser geschweißt werden kann. Es ist des Weiteren eine Aufgabe der Erfindung, ein zugehöriges Verfahren bereitzustellen.

Dies wird erfindungsgemäß durch eine Schweißvorrichtung sowie ein Verfahren gemäß den jeweiligen Hauptansprüchen erreicht. Vorteilhafte Ausgestaltungen können beispielsweise den jeweiligen Unteransprüchen entnommen werden.

Die Erfindung betrifft eine Schweißvorrichtung, welche insbesondere für das Verschweißen von mindestens zwei Werkstücken einer Werkstückanordnung vorgesehen ist. Die Schweißvorrichtung weist mindestens zwei Laserstrahlquellen auf, deren Laserstrahlen auf die gleiche zu verschweißende Werkstückanordnung gerichtet sind.

Mittels der erfindungsgemäßen Schweißvorrichtung ist es möglich, an zwei Stellen der Schweißbahn gleichzeitig zu schweißen. Damit kann eine symmetrische Bearbeitung erreicht werden, welche das Auftreten von Verspannungen verhindert oder verringert. Somit kann schneller und zuverlässiger geschweißt werden. Außerdem wird ein gleichmäßigeres Ergebnis erreicht.

Es sei des Weiteren erwähnt, dass bereits durch die Möglichkeit des gleichzeitigen Schweißens mit zwei Laserstrahlen die Schweißzeit in etwa halbiert werden kann.

Die Schweißvorrichtung kann auch mehr als zwei, beispielsweise drei, vier oder mehr Laserstrahlquellen aufweisen.

Unter einer Laserstrahlquelle sei hier insbesondere allgemein eine Einrichtung verstanden, welche einen Laserstrahl auf die Werkstückanordnung abgibt. Dabei kann die Laserstrahlquelle den Laserstrahl insbesondere auch fokussieren. Es muss sich also bei einer Laserstrahlquelle nicht zwingend um eine Einrichtung handeln, welche auch selbständig den Laserstrahl erzeugt. Es kann hierzu beispielsweise ein externer Laser vorhanden sein, dessen Laserstrahl durch entsprechende Strahlteiler auf beide Laserstrahlquellen aufgeteilt wird. Es kann jedoch beispielsweise auch jede Laserstrahlquelle einen eigenen Laser aufweisen.

Es sei verstanden, dass die Laserstrahlen insbesondere im Betrieb der Schweißvorrichtung betrachtet werden. Selbst bei ausgeschalteter Schweißvorrichtung bzw. ausgeschalteten oder blockierten Laserstrahlen wird der Fachmann jedoch keine Probleme damit haben, den im Betrieb zu erwartenden Verlauf der Laserstrahlen zu erkennen.

Gemäß einer Weiterbildung weist die Schweißvorrichtung einen dreh- und/oder bewegbaren Aufspanntisch für die Werkstückanordnung auf. Die Werkstückanordnung wird insbesondere während des Verschweißens um eine Drehachse gedreht und/oder bewegt. Mittels eines solchen Aufspanntisches kann die Werkstückanordnung bzw. können die sie bildenden Werkstücke an einer geeigneten Stelle aufgespannt werden, so dass die Laserstrahlen an geeigneten Stellen auf die Werkstücke treffen.

Der Aufspanntisch kann auch dazu vorgesehen sein, die Werkstücke vor dem Schweißen und/oder während des Schweißens zu verfahren und/oder zu drehen. Beispielsweise können auf diese Weise die Werkstücke so verfahren oder gedreht werden, dass die Laserstrahlen die Schweißlinie abfahren.

Alternativ kann der Aufspanntisch jedoch auch in einer festen Positionsbeziehung zur restlichen Schweißvorrichtung stehen.

Gemäß einer bevorzugten Ausführung ist vorgesehen, dass die mindestens zwei Laserstrahlquellen gemeinsam beweg- und/oder drehbar und/oder derart zueinander bewegbar angeordnet sind, dass der Abstand der Laserstrahlquellen zueinander veränderlich ist und die Laserstrahlquellen während des Verschweißens gedreht und/oder bewegt werden. Auch ein einzelnes Bewegen ist jedoch grundsätzlich möglich.

Damit wird insbesondere das Prinzip der kinematischen Umkehr im Vergleich zum Bewegen oder Drehen des Aufspanntisches bzw. der Werkstücke beschrieben. Es sei verstanden, dass es schweißtechnisch typischerweise äquivalent ist, ob die Schweißvorrichtung bewegt wird, ob die Werkstücke bewegt werden, oder ob sowohl die Schweißvorrichtung wie auch die Werkstücke bewegt werden, um die Laserstrahlen entlang der Schweißbahn zu führen. Außerdem können auch die Laserstrahlquellen entsprechend verstellt werden. Jede dieser Ausführungen kann diverse Vorteile hinsichtlich Handhabung, Präzision, Aufwand etc. aufweisen.

Jede Laserstrahlquelle ist bevorzugt mit einer insbesondere eigenständigen Fokussiereinheit ausgestattet, die zumindest eine Lage-Verstell-Einrichtung für die Laserstrahlquelle aufweist. Eine jeweilige Lage-Verstell-Einrichtung ist dabei insbesondere dazu ausgebildet, die Lage der Laserstrahlquelle relativ zur Werkstückanordnung zu verändern.

Der Laserstrahl ist dabei insbesondere kegelförmig, wobei die Spitze des Kegels insbesondere der Fokus ist, welcher insbesondere nachfolgend als Schweißpunkt beschrieben werden wird. Insbesondere kann die Fokussiereinheit zur Erzeugung bzw. Formung eines solchen Laserstrahls ausgebildet sein.

Gemäß einer Weiterbildung weist die Fokussiereinheit eine Überwachungseinheit auf, welche die Lage des Schweißpunktes überwacht und mit der Lage-Verstell-Einrichtung regelungstechnisch verbunden ist. Dies ermöglicht eine laufende und insbesondere automatisierte Überwachung des Schweißvorgangs. Die Überwachungseinheit kann vorteilhaft eine Kamera, insbesondere eine Digitalkamera und/oder eine Videokamera sein. Dadurch kann auch das Vorsehen von Schutzvorrichtungen vermieden werden, welche eine manuelle Beobachtung unter Berücksichtigung der auftretenden gefährlichen Strahlung ermöglicht. Des Weiteren kann menschliche Arbeitskraft eingespart werden. Insbesondere kann hierzu eine Bilderkennung verwendet werden, um den Schweißvorgang zu überwachen.

Geschickter Weise sind die Laserstrahlquellen je zumindest auf einer Führung beweglich positionierbar angeordnet und der Abstand der Laserstrahlquellen zueinander und somit auch der Abstand der Schweißpunkte ist zueinander für Einstellzwecke einstellbar. Dies ermöglicht die Verwendung der Schweißvorrichtung für unterschiedliche Werkstücke, welche miteinander zu verschweißen sind, insbesondere mit unterschiedlichen Dimensionen. Vorteilhaft kann damit die Schweißvorrichtung für runde Schweißbahnen mit unterschiedlichen Durchmessern verwendet werden.

Alternativ können die Laserstrahlquellen jedoch auch fest bzw. in fester Positionsbeziehung angeordnet sein.

Bevorzugt ist eine Videoaufzeichnungsvorrichtung für den Schweißpunkt bzw. die Schweißpunkte vorgesehen. Dies erlaubt grundsätzlich die Überwachung der Schweißpunkte und des Schweißvorgangs, was beispielsweise manuell, insbesondere mittels eines Videodaten anzeigenden Bildschirms, oder auch automatisch, insbesondere mittels eines Bilderkennungssystems, erfolgen kann.

Eine solche Videoaufzeichnung erleichtert insbesondere die Einstellung des Schweißpunktes bei einem Formatwechsel bzw. Durchmesserwechsel. Die Videoaufzeichnungsvorrichtung kann Teil der bzw. einer Fokussiereinheit sein. Die Videoaufzeichnungsvorrichtung kann auch der Dokumentation der Verschweißung und somit der Qualitätskontrolle dienen. Hierzu kann beispielsweise eine Speichervorrichtung vorgesehen sein, welche Videodaten der Videoaufzeichnungsvorrichtung speichert.

Bei der Speichervorrichtung kann es sich beispielsweise um eine Festplatte, ein Magnetband, eine Speicherkarte oder um eine andere, insbesondere handelsübliche Speichervorrichtung handeln.

Es sei verstanden, dass für die Erzeugung der Laserstrahlen insbesondere einer oder mehrere CO₂-Laser verwendet werden können. Diese haben sich insbesondere aufgrund der typischerweise erreichten Wellenlänge und Leistung als vorteilhaft erwiesen. Auch andere Laser sind jedoch grundsätzlich verwendbar.

Die Erfindung betrifft des Weiteren ein Verfahren für das Verschweißen zweier Werkstücke einer Werkstückanordnung. Dafür kann insbesondere eine erfindungsgemäße Schweißvorrichtung verwendet werden, wobei auf alle beschriebenen Ausführungen und Varianten zurückgegriffen werden kann.

Die beiden Werkstücke weisen dabei je eine, in der zusammengefügten Werkstückanordnung im Wesentlichen parallel verlaufende Werkstückkanten auf, wobei mindestens zwei Laserstrahlquellen an jeweils unterschiedlichen Stellen der Werkstückkanten die Werkstücke verschweißen und entweder die Werkstückanordnung und/oder die Laserstrahlquellen während des Schweißens bewegt werden. Dies erlaubt ein vorteilhaftes Verschweißen unmittelbar an den Werkstückkanten, was die erforderliche Zeit und die Intensität der Bearbeitung verringert.

Es sei erwähnt, dass unter einem parallelen Verlauf bei gebogenen, beispielsweise kreisförmigen Werkstückkanten typischerweise eine Parallelität der Tangenten verstanden wird.

Mittels des erfindungsgemäßen Verfahrens ist es möglich, Schweißnähte zu erzeugen und dabei deutlich weniger Verspannungen zu verursachen als bei Ausführungen bzw. Verfahren gemäß dem Stand der Technik. Dies basiert insbesondere auf der Verwendung von zumindest zwei Schweißpunkten gleichzeitig.

Insbesondere kann das erfindungsgemäße Verfahren angewendet werden, um einen mit einer Welle verbundener Teller oder eine Scheibe mit einem Rippengehäuse zu verschweißen. Dabei werden typischerweise kreisförmige Schweißbahnen verwendet und es wird auf möglichst geringe Verspannungen Wert gelegt.

Es sei verstanden, dass die Anwendung des Prinzips bzw. des erfindungsgemäßen Verfahrens nicht auf eine spezielle Form der Schweißkanten eingeschränkt ist. Diese können beispielsweise gerade verlaufend, einer Kreisbahn folgend, oval verlaufend usw. sein. Entsprechend kann die Schweißvorrichtung ausgeführt sein.

Gemäß einer bevorzugten Ausführung wird die Werkstückanordnung während des Verschweißens um eine Drehachse gedreht, wodurch eine kreisbahnförmige Verschweißung entsteht und sich die Schweißpunkte der mindestens zwei Laserstrahlquellen bezüglich der Drehachse möglichst gegenüberliegend oder mit großem angulärem Abstand befinden.

Dadurch wird insbesondere erreicht, dass die beiden Schweißpunkte möglichst weit voneinander beabstandet sind. Damit kann das Entstehen von Verspannungen besonders vorteilhaft verhindert werden.

Es sei verstanden, dass die mit Bezug auf die Schweißvorrichtung und das Verfahren beschriebenen Prinzipien skalierbar sind. Insbesondere können anstelle von zwei Laserstrahlen mit jeweiligen Schweißpunkten beispielsweise auch drei, vier oder eine höhere Zahl von Laserstrahlen mit jeweiligen Schweißpunkten verwendet werden. Entsprechend können diese beispielsweise in gleichen Winkelabständen zu ihren jeweiligen Nachbarn angeordnet sein, insbesondere wenn als Schweißbahn eine Kreisbahn verwendet werden soll.

In diesem Zusammenhang wird insbesondere darauf hingewiesen, dass alle im Bezug auf die Vorrichtung beschriebenen Merkmale und Eigenschaften aber auch Verfahrensweisen sinngemäß auch bezüglich der Formulierung des erfindungsgemäßen Verfahrens übertragbar und im Sinne der Erfindung einsetzbar und als mitoffenbart gelten. Gleiches gilt auch in umgekehrter Richtung, das bedeutet, nur im Bezug auf das Verfahren genannte, bauliche also vorrichtungsgemäße Merkmale können auch im Rahmen der Vorrichtungsansprüche berücksichtigt und beansprucht werden und zählen ebenfalls zur Offenbarung.

In der Zeichnung ist die Erfindung insbesondere in einem Ausführungsbeispiel schematisch dargestellt. Es zeigen:
- Fig. 1:: Eine Draufsicht auf eine erfindungsgemäße Schweißvorrichtung.
- Fig. 2:: Eine Seitenansicht der erfindungsgemäßen Schweißvorrichtung.
- Fig. 3:: Eine perspektivische Ansicht der erfindungsgemäßen Schweißvorrichtung.
- Fig. 4a:: Eine perspektivische Ansicht eines Aufspanntisches mit aufgespannten Werkstücken gemäß der Erfindung.
- Fig. 4b:: Eine seitliche Schnittansicht des Aufspanntisches mit Werkstücken während einer Bearbeitung gemäß der Erfindung.

In den Figuren sind gleiche oder einander entsprechende Elemente jeweils mit den gleichen Bezugszeichen bezeichnet und werden daher, sofern nicht zweckmäßig, nicht erneut beschrieben. Die in der gesamten Beschreibung enthaltenen Offenbarungen sind sinngemäß auf gleiche Teile mit gleichen Bezugszeichen bzw. gleichen Bauteilbezeichnungen übertragbar. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiterhin können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

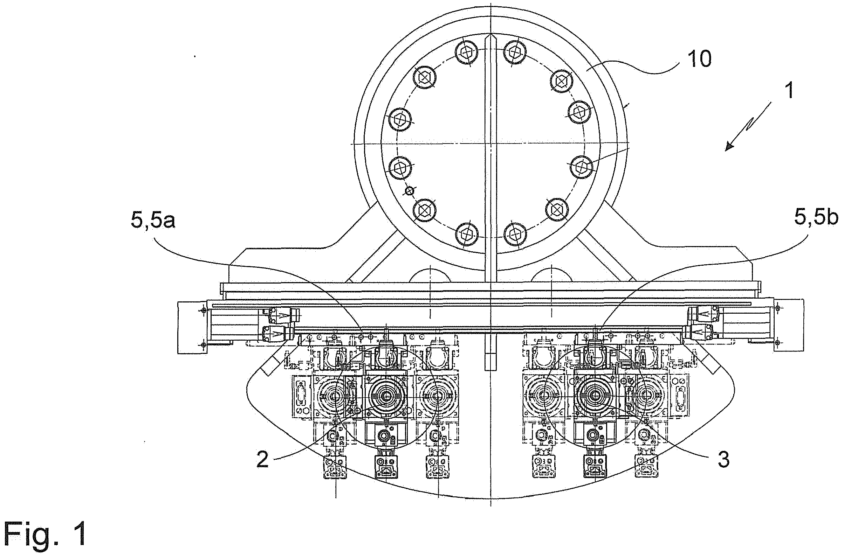

Figur 1 zeigt eine Draufsicht auf eine Schweißvorrichtung 1 gemäß einem Ausführungsbeispiel der Erfindung. Die Schweißvorrichtung 1 weist ein Grundgerüst 10 auf, welches für eine grundlegende Struktur und Stabilität der Schweißvorrichtung 1 sorgt.

Die Schweißvorrichtung 1 weist eine erste Laserstrahlquelle 2 und eine zweite Laserstrahlquelle 3 auf. Die Laserstrahlquellen 2, 3 sind beide am Grundgerüst 10 angebracht, worauf weiter unten noch näher eingegangen werden wird.

Die Schweißvorrichtung 1 weist ferner eine Führung 5 auf, welche in eine erste Führung 5a und eine zweite Führung 5b unterteilt ist. Die erste Führung 5a ist dabei der ersten Laserstrahlquelle 2 zugeordnet. Die zweite Führung 5b ist der zweiten Laserstrahlquelle 3 zugeordnet. Die Führung 5 erlaubt ein seitliches Verschieben der Laserstrahlquellen 2, 3. Damit kann insbesondere der Abstand der beiden Laserstrahlquellen 2, 3 eingestellt werden. Dies erlaubt eine einfache Anpassung an unterschiedliche gewünschte Abstände zwischen Fokuspunkten.

Jede der Laserstrahlquellen 2, 3 ist dazu ausgebildet, einen jeweiligen Laserstrahl in eine Richtung quer zur Papierebene von Figur 1 nach unten abzugeben. Hierauf wird weiter unten noch näher eingegangen.

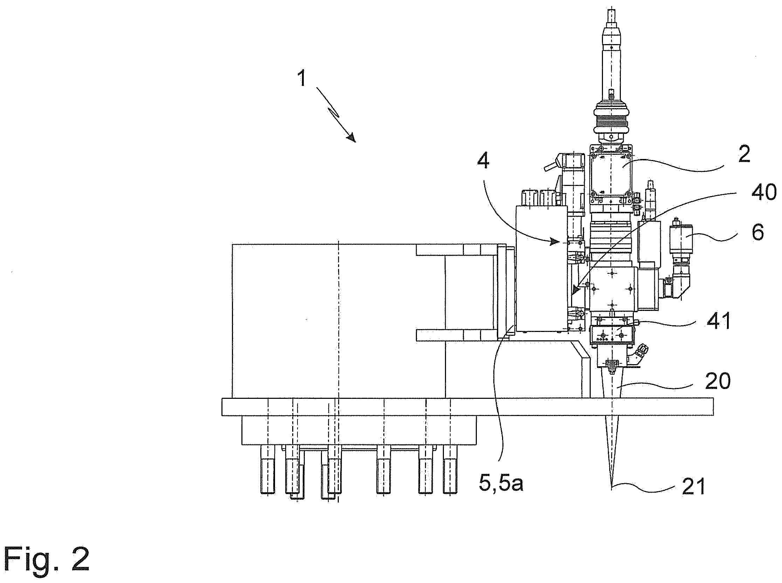

Figur 2 zeigt die Schweißvorrichtung 1 in einer Seitenansicht. Genauer gesagt erfolgt der Blick auf die erste Laserstrahlquelle 2.

Dabei ist zunächst zu erkennen, dass die erste Laserstrahlquelle 2 einen ersten Laserstrahl 20 nach unten abgibt. Dieser erste Laserstrahl 20 ist fokussiert, so dass er eine Kegelform hat. An seiner unteren Spitze bildet er einen Fokus 21 aus. In diesem ist die Energie des ersten Laserstrahls 20 konzentriert, so dass an dieser Stelle bevorzugt ein Laserstrahlschweißen erfolgen kann. Anders ausgedrückt dient der Fokus 21 bevorzugt als Schweißpunkt zum Laserstrahlschweißen.

Zum Fokussieren des ersten Laserstrahls 20 weist die erste Laserstrahlquelle 2 eine Fokussiereinheit 4 auf. Die Fokussiereinheit 4 dient dazu, einen kollimierten Laserstrahl zu fokussieren, so dass er die bereits beschriebene Kegelform annimmt und den Fokus 21 ausbildet.

Optisch nachgelagert zur Fokussiereinheit 4 ist eine Spiegelanordnung 41 angeordnet. Auf diese trifft der bereits fokussierte Laserstrahl. Die Spiegelanordnung 41 weist eine Anzahl von Spiegeln auf, welche zumindest teilweise beweglich sind. Damit kann der Laserstrahl abgelenkt werden und die horizontale Position des Fokus 21 kann definiert eingestellt werden.

Die erste Laserstrahlquelle 2 weist des Weiteren eine Videoaufzeichnungsvorrichtung 6 auf. Diese ist vorliegend als CCD-Kamera ausgebildet. Sie ist in den Strahlengang der Laserstrahlquelle 2 eingekoppelt und dient der Beobachtung des Fokus 21 und damit auch eines mit der Schweißvorrichtung 1 auszuführenden Schweißvorgangs.

Die erste Laserstrahlquelle 2 ist an einer Lage-Verstell-Einrichtung 40 angebracht, welche an der ersten Führung 5a beweglich ist. Dies erlaubt ein Verstellen der Lage der ersten Laserstrahlquelle 2 und damit auch ein Verstellen des Fokus 21.

Es sei verstanden, dass die eben mit Bezug auf die erste Laserstrahlquelle 2 gegebene Beschreibung auch für die zweite Laserstrahlquelle 3 entsprechend zutrifft.

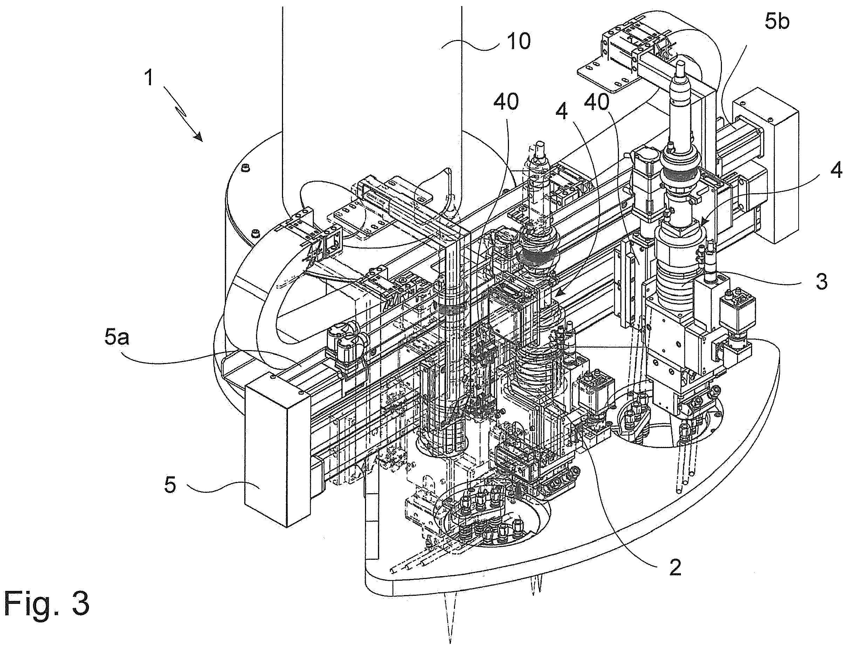

Figur 3 zeigt eine perspektivische Ansicht der Schweißvorrichtung 1. Dabei ist insbesondere zu erkennen, dass die Führung 5 durchgängig in Schienenform ausgebildet ist. Die Unterteilung in die erste Führung 5a und die zweite Führung 5b entspricht somit einer Einteilung in entsprechende Abschnitte entlang der Führung 5.

Ansonsten sei auf die Beschreibung zu den Figuren 1 und 2 verwiesen.

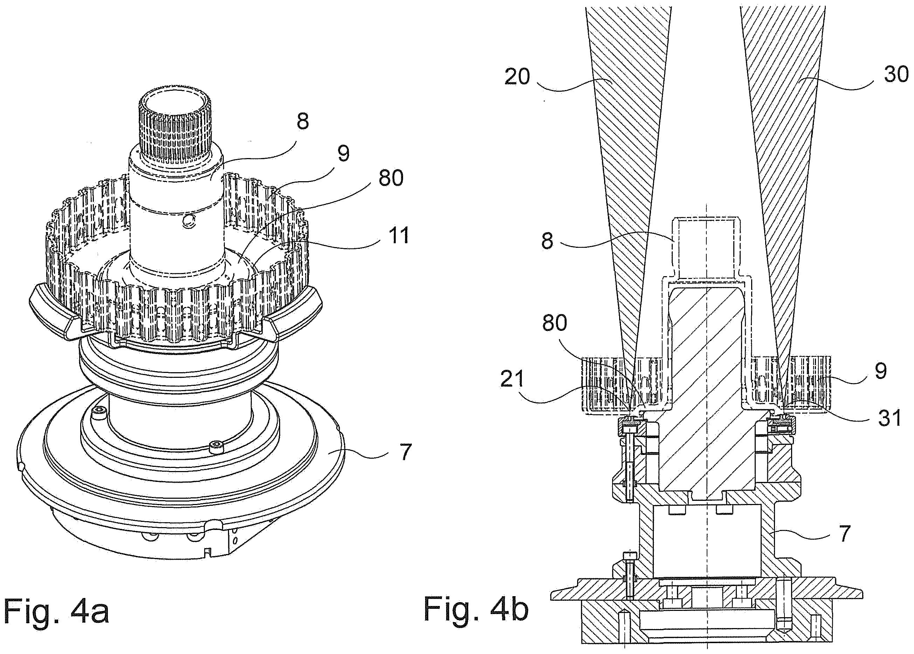

Figur 4a zeigt in perspektivischer Ansicht einen Aufspanntisch 7. Auf diesem sind ein erstes Werkstück 8 und ein zweites Werkstück 9 aufgespannt. Diese beiden Werkstücke sollen mittels der Schweißvorrichtung 1 miteinander verschweißt werden. Sie bilden somit zusammen eine Werkstückanordnung.

Bei dem ersten Werkstück 8 handelt es sich vorliegend um eine Welle mit einer daran angebrachten Scheibe 80, wobei die Scheibe 80 an ihrem Außenbereich mit dem zweiten Werkstück 9 verbunden werden soll. Es ergibt sich somit eine ringförmige Schweißlinie 11, entlang welcher eine Schweißnaht ausgebildet werden soll. Bei dem zweiten Werkstück 9 handelt es sich vorliegend um ein Rippengehäuse, welches beispielsweise in Kupplungen von Kraftfahrzeugen verwendet wird.

Ein Zustand während des Schweißvorgangs ist in Figur 4b dargestellt. Diese Figur zeigt eine seitliche Schnittansicht durch den Aufspanntisch 7 und die beiden Werkstücke 8, 9. Des Weiteren sind der bereits mit Bezug auf Figur 2 beschriebene erste Laserstrahl 20 sowie ein zweiter Laserstrahl 30 dargestellt. Der zweite Laserstrahl 30 wird von der zweiten Laserstrahlquelle 3 abgegeben. Er ist ebenfalls kegelförmig und endet untenseitig mit einem Fokus 31.

Die beiden Foki 21, 31 befinden sich während des Laserstrahlschweißens unmittelbar auf einer Linie, welche durch den Kontakt zwischen der Scheibe 80 und dem zweiten Werkstück 9 definiert ist. Der Winkelabstand zwischen den beiden Foki 21, 31 beträgt vorliegend 180°. Der Aufspanntisch 7 wird während des Schweißvorgangs gedreht, so dass insgesamt eine runde Schweißbahn entsteht.

Durch die gleichzeitige Bearbeitung an zwei gegenüberliegenden, also um 180° versetzten Stellen wird eine bei der Schweißung grundsätzlich auftretende Verspannung deutlich abgemildert. Es kann insgesamt eine wesentlich schonendere und auch schnellere Bearbeitung unter Minimierung von Ausschuss erfolgen.

Die jetzt mit der Anmeldung und später eingereichten Ansprüche sind ohne Präjudiz für die Erzielung weitergehenden Schutzes.

Sollte sich hier bei näherer Prüfung, insbesondere auch des einschlägigen Standes der Technik, ergeben, dass das eine oder andere Merkmal für das Ziel der Erfindung zwar günstig, nicht aber entscheidend wichtig ist, so wird selbstverständlich schon jetzt eine Formulierung angestrebt, die ein solches Merkmal, insbesondere im Hauptanspruch, nicht mehr aufweist. Auch eine solche Unterkombination ist von der Offenbarung dieser Anmeldung abgedeckt.

Es ist weiter zu beachten, dass die in den verschiedenen Ausführungsformen beschriebenen und in den Figuren gezeigten Ausgestaltungen und Varianten der Erfindung beliebig untereinander kombinierbar sind. Dabei sind einzelne oder mehrere Merkmale beliebig gegeneinander austauschbar. Diese Merkmalskombinationen sind ebenso mit offenbart.

Die in den abhängigen Ansprüchen angeführten Rückbeziehungen weisen auf die weitere Ausbildung des Gegenstandes des Hauptanspruches durch die Merkmale des jeweiligen Unteranspruches hin. Jedoch sind diese nicht als ein Verzicht auf die Erzielung eines selbständigen, gegenständlichen Schutzes für die Merkmale der rückbezogenen Unteransprüche zu verstehen.

Merkmale, die nur in der Beschreibung offenbart wurden oder auch Einzelmerkmale aus Ansprüchen, die eine Mehrzahl von Merkmalen umfassen, können jederzeit als von erfindungswesentlicher Bedeutung zur Abgrenzung vom Stande der Technik in den oder die unabhängigen Anspruch/Ansprüche übernommen werden, und zwar auch dann, wenn solche Merkmale im Zusammenhang mit anderen Merkmalen erwähnt wurden beziehungsweise im Zusammenhang mit anderen Merkmalen besonders günstige Ergebnisse erreichen.

## Patentansprüche

1. Schweißvorrichtung, welche insbesondere für das Verschweißen von mindestens zwei Werkstücken einer Werkstückanordnung vorgesehen ist, aufweisend mindestens zwei Laserstrahlquellen (2, 3), deren Laserstrahlen (20, 30) auf die gleiche zu verschweißende Werkstückanordnung gerichtet sind.

2. Schweißvorrichtung nach Anspruch 1, **dadurch gekennzeichnet, dass** die Schweißvorrichtung (1) einen dreh- und/oder bewegbaren Aufspanntisch (7) für die Werkstückanordnung aufweist, und die Werkstückanordnung während des Verschweißens um eine Drehachse gedreht und/oder bewegt wird.

3. Schweißvorrichtung nach einem der vorhergehenden Ansprüchen, **dadurch gekennzeichnet, dass** die mindestens zwei Laserstrahlquellen (2, 3) gemeinsam beweg- und/oder drehbar und/oder derart zueinander bewegbar angeordnet sind, dass der Abstand der Laserstrahlquellen (2, 3) zueinander veränderlich ist und die Laserstrahlquellen (2, 3) während des Verschweißens gedreht und/oder bewegt werden.

4. Schweißvorrichtung nach einem der vorhergehenden Ansprüche, **dadurch gekennzeichnet, dass** jede Laserstrahlquelle (2, 3), mit einer insbesondere eigenständigen Fokussiereinheit (4) ausgestattet ist, die zumindest eine Lage-Verstell-Einrichtung (40) für die Laserstrahlquelle (2, 3) aufweist.

5. Schweißvorrichtung nach einem der vorhergehenden Ansprüche, **dadurch gekennzeichnet, dass** das die Fokussiereinheit (4) eine Überwachungseinheit aufweist, die die Lage des Schweißpunktes überwacht und mit der Lage-Verstell-Einrichtung regelungstechnisch verbunden ist.

6. Schweißvorrichtung nach einem der vorhergehenden Ansprüche, **dadurch gekennzeichnet, dass** die Laserstrahlquelle (2, 3) je zumindest auf einer Führung (5, 5a, 5b) beweglich positionierbar angeordnet sind und der Abstand der Laserstrahlquellen (2, 3) zueinander und somit auch der Abstand der Schweißpunkte zueinander für Einstellzwecke einstellbar ist.

7. Schweißvorrichtung nach einem der vorhergehenden Ansprüche, **dadurch gekennzeichnet, dass** eine Videoaufzeichnungsvorrichtung (6) für den Schweißpunkt vorgesehen ist.

8. Verfahren für das Verschweißen zweier Werkstücke einer Werkstückanordnung, insbesondere mit einer Schweißvorrichtung nach einem der vorhergehenden Ansprüche, wobei die beiden Werkstücke je eine, in der zusammengefügten Werkstückanordnung im Wesentlichen parallel verlaufenden Werkstückkanten aufweisen, wobei mindestens zwei Laserstrahlquellen an jeweils unterschiedlichen Stellen der Werkstückkanten, die Werkstücke verschweißen und entweder die Werkstückanordnung und/oder die Laserstrahlquellen während des Schweißens bewegt werden.

9. Verfahren nach Anspruch 8, **dadurch gekennzeichnet, dass** die Werkstückanordnung während des Verschweißens um eine Drehachse gedreht wird, wodurch eine kreisbahnförmige Verschweißung entsteht und sich die Schweißpunkte der mindestens zwei Laserstrahlquellen bezüglich der Drehachse möglichst gegenüberliegend oder mit großem angulärem Abstand befinden.
